# EUROPEAN PATENT SPECIFICATION

(11) **EP 1 467 297 B1**
(45) Date of publication and mention of the grant of the patent: **19.08.2009**
(21) Application number: 03704708.1
(22) Date of filing: 10.01.2003
(51) Int. Cl.: G07F 7/02

(54) **METHOD OF SENDING AND VALIDATING DOCUMENTS**
VERFAHREN ZUM SENDEN UND VALIDIEREN VON DOKUMENTEN
PROCEDE DE DELIVRANCE ET DE VALIDATION DE DOCUMENTS

(30) Priority: 15.01.2002 ES 200200070
(43) Date of publication of application: 13.10.2004
(73) Proprietor: Universitat Politecnica de Catalunya, 08034 Barcelona (ES)
(72) Inventor: Rico Novella, Francisco Jose, 08034 Barcelona (ES); Forga Alberich, Jordi, 08034 Barcelona (ES); Sanicente Gargallo, Emilio, 08034 Barcelona (ES); Mata Diaz, Jorge, 08034 Barcelona (ES); De La Cruz Llopis, Luis Javier, 08034 Barcelona (ES); Alins Delgado, Juan Jose, 08034 Barcelona (ES)
(74) Representative: Urizar Anasagasti, José Antonio
(86) International application number: PCT/ES2003/000008
(87) International publication number: WO 2003/060782

(56) References cited:
- EP-A- 0 969 426
- WO-A-00/45348
- WO-A-01/15089
- WO-A-01/61577
- GB-A- 2 360 384
- US-A- 5 341 428

## Description

This invention is in reference to a method of sending and validation documents, and makes it impossible to make a fraudulent copy of a document. As is explained below, the method to be outlined in greater detail herein offers several advantages.

Although this report specifically deals with those cases where the documents to be obtained are tickets, the method introduced by said invention can also be applied to other, more general, types of document, as will be explained further on.

Today it is possible to order or book many different types of ticket, such as plane tickets, train tickets, admission tickets to shows, etc. through telesales systems. Said tickets can be paid for in several different ways, by credit card or by charging the cost to a bank accours, or an account in a similar institution.

Nevertheless, to collect tickets purchased in this way, these must be sent to the purchaser by post or using a messenger service, meaning increased issuing costs and an inconvenience for the user, in the event these have to travel to pick them up.

Until now, tickets have been delivered in this way principally because the authenticity of this type of document is based on a certain characteristic of the support used (the paper) or the printing method to make these more difficult to falsify. This means that the user cannot obtain a printed copy of the document in question.

As an alternative to this method, the abovementioned technique proposes several different systems for remotely sending tickets, and a brief summary of these is given below.

The first system is the one described, to a greater or lesser degree, in documents n° WO01/61577 A2, WO00/74300 A1, WO00/45348, WO200161577, WO2000744300, WO200045348 and US5598477, and is principally based on coding the data considered relevant and then encrypting this, using asymmetric or symmetric key techniques. The result of this encoding is then printed as a barcode or similar so that it can be automatically checked when being validated. This system makes it impossible for anyone who does not know the encryption key to generate tickets (in the event asymmetric key cryptography is used, this would refer to the secret key of the algorithm). However, one disadvantage of this method is that it is possible to obtain copies of a ticket that has already been sent and, as a result, it is necessary to use other additional security measures, such as the on-line control of validated tickets, the inclusion of verifiable personal data (National ID Number, passport, or other) in the encrypted code (in the case of those tickets that include a fixed date or place of use), etc. The system is especially inefficient in the case of tickets that can be used on a wide range of dates, such as hotel vouchers, public transportation tickets, etc. and in places where there is great many people trying to gain admission, as the time needed to check the identity of the holder would create serious inconvenience. For all of the above reasons this system is not widely used in practice.

Another possible system is the one described, to a greater or lesser degree, in documents n° EP0969426 A1, EP0829828 A, EP969426, JP11306397, EP309318 and others, and is based on recording the ticket information on a device such as a smart card. As the recording device (card) allows the use of cryptographic techniques for firm identification and makes it extremely difficult to violate the information stored therein, it is practically impossible to duplicate the ticket, thus guaranteeing there is no more than one. Therefore, it is not necessary to carry out on-line control to validate the ticket nor it is necessary to identify the holder when the ticket is to be used. Nevertheless, one disadvantage of this system is that the user is required to have a smart card recording peripheral in their house, making the system extremely costly to use, which is why it is rarely employed in practice.

WO 01/15089 relates to a method for granting admission to an event, where an admission code is issued to a consumer via a distribution channel having a predetermined format and which forms part of a set of admission codes. The set of admission codes is made up of a predetermined random or pseudo-random subset of all codes having the predetermined format by means of cryptographic operations, and it is checked at the entrance to the event whether a code presented by a consumer is part of the set of admission codes. At the entrance to the event the presented code is preferably input into the admission computer by means of an input apparatus, preferably an optical scanner, which admission computer carries out the check at the entrance. The main disadvantage of this invention is that there is a need of being connected on-line with an admission computer from the input apparatus. The applicant's invention also uses an admission code, but its validation at the entrance of the event does not require to be connected to an admission computer, which does not exists, but a concordance between cryptographic keys and procedures stored/carried out in/by some devices involved in the invention, as will be explained below.

An alternative to these systems for remotely sending tickets is proposed by the new method introduced by this invention, and this solves all the problems related with other known systems. The invention proposes a new method for obtaining documents (for example, tickets) generally at the user's home and their later automatic validation. Thanks to the new method introduced by this invention it impossible to make a fraudulent duplicate of any ticket (thus guaranteeing there is no more than one) and makes it unnecessary for the user to have a smart card reader/recorder, thus making the system more flexible and less costly.

The method introduced by this invention uses cryptographic techniques along with portable verifier devices which can process and store information and which offer a high level of protection against unauthorized readers and writers and make it very difficult to make fraudulent copies.

The most appropriate portable verifier devices are smart cards.

Although, theoretically speaking, it is more appropriate to use public key cryptography to obtain authentication codes (as this means it is not necessary to store secret keys during the validation stage), the codes will be considerably larger than necessary in size, if secret key (symmetric) cryptography is used. If the document is not to be printed but presented in another format (magnetic, optical, electronic support, etc.) this has no particular relevance. However, in the event the document is to be printed, the fact the authentication code is to be read automatically makes it necessary to use dot codes, which means more expensive apparatus will be required to read them. For this reason, and to facilitate printed support, the use of symmetric key cryptography is preferable. In contrast, it is necessary to use secure key storage devices, generally security microprocessors, in the verifiers.

The invention is a secure system to remotely send documents (usually tickets and generally through Internet from a browser) and validate these using automatic readers (generally barcode readers), which can read/write in the portable verifier devices (generally smart cards). To improve reading speed, sturdiness and versatility it is recommended that no direct contact be necessary when using a portable verifier device.

The elements involved in the entire process of the invention are as follows
- The portable verifier device issuer this is in charge of providing the portable verifier devices necessary to validate the documents.
- The portable verifier device operator: this encrypts the document to be decrypted by the portable verifier device.

In order to carry out this function, the corresponding keys must be loaded into the portable verifier device. A portable verifier device can support several portable verifier device operators. A portable verifier device operator may coincide with a portable verifier device issuer.
- A document portal: this is in charge of providing the interface necessary to select and, where applicable, purchase a document Once a document has been selected, the portal sends the appropriate data to a reader operator so that it can be encrypted using the key of the group of readers/verifiers/recorders in charge of validating the document.
- A reader operator: this is in charge of encrypting the document to be decrypted by the abovementioned group of readers/verifiers/recorders. The reader operator is in charge of managing the keys stored in the readers/verifier/recorders. A reader operator may coincide with a portal.
- A reader/verifier/recorder: this reads the document's authentication code, transmits this to the portable verifier device, receives the response, decrypts it with the key corresponding to the reader operator andvalidates or rejects the document.
- A portable verifier device: this receives the document's authentication code (transmitted by the reader/verifier/recorder), and, provided this has not been cancelled beforehand, decrypts the portable verifier device operators using the corresponding code, includes this in the list of cancellations and sends the results of the decryption to the reader/verifier/recorder.
The method for sending and validating documents introduced by this invention is carried out using authentication codes and portable verifier elements which can process and store information and which offer a high level of protection against unauthorized readers and writers.

The inventive method is characterised in that the aforementioned authentication code is generated specifically for a particular portable verifier and is indicated directly or indirectly by the person requesting the document. In this way, no data record of any type is required in the portable verifier element up to the point at which the document is validated. It is essential, however, that the portable verifier be actively involved in the validation, said portable verifier containing a stored list of validated documents such that it is possible to determine, at least, whether or not this is the first validation.

This method for sending and validating documents is comprised of the following phases:
- The document is generated from a document portal and the data considered relevant is coded using the key that corresponds to the group of readers/verifiers/recorders involved in the validation of the document, so that the first cryptographic operation can be carried out. Linked to the first one, there is another second cryptographic operation which includes the key corresponding to the portable verifier device associated with the document, and, as a result of these cryptographic operations, an authentication code is created for the document and is incorporated therein; and
- The document is checked by reading its authentication code, and the appropriate third cryptographic operations are carried out to verify those already employed to generate the document. It is essential, however, that the portable verifier device associated for the validation of the document be actively involved, and said portable verifier should contain a list of validated documents such that it is possible to determine, at least, whether or not this is the first validation.

In accordance with the design of the invention, the portable verifier devices can be individualized by storing one or more portable verifier device keys, which must be a symmetric or secret key encryption algorithm. In addition, the first and second cryptographic operations are made up of two encryptions using a symmetric cryptographic algorithm, one with the key of the group of readers/verifiers/recorders involved in the validation of the document and the other with the key that corresponds to the portable verifier device associated with the document. The third cryptographic operations consist of decrypting, by the portable verifier device using its corresponding key, of the document's authentication code and the subsequent decryption, carried out by the aforementioned reader/verifier/recorder and its corresponding code. Both decryptions will be effected through symmetric cryptographic algorithms.

Ideally, the portable verifier devices should be individualized by storing one or more portable verifier device keys, which must be the secret keys of an asymmetric or public key cryptographic algorithm. The abovedescribed first and second cryptographic operations are based on public key cryptography, which is composed of a digital signature with a secret key, and the readers/verifiers/recorders involved in the validation of the document will know its corresponding public key, and an encryption with the corresponding public key of the portable verifier device associated with the document. The third cryptographic operations will be based on public key cryptography composed of a decryption using the secret key corresponding to the portable verifier device associated with the document and the verification of the signature, with the corresponding public key stored in the readers/verifiers/recorders.

Alternatively, the portable verifier devices can be individualized by storing one or more portable verifier device keys, which must be the secret keys of an asymmetric or public key encryption algorithm. The abovedescribed first and second cryptographic operations are based on public key cryptography which is composed of an encryption using the public key of the readers/verifiers/recorders involved in the validation of the document and an encryption using the public key corresponding to the portable verifier device associated with the document. The abovementioned third cryptographic operations will be based on public key cryptography composed of a decryption using the secret key corresponding to the portable verifier device associated with the document and a decryption using the secret key of said readers/verifiers/recorders.

This invention also offers the possibility of individualizing the portable verifier devices by storing one or more portable verifier device keys, which must be the public keys of an asymmetric or public key cryptographic algorithm. The first and second cryptographic operations are based on public key cryptography which is composed of a digital signature using a secret key corresponding to the public key stored in the readers/verifiers/recorders involved in the validation of the document, and another digital signature using the secret key corresponding to the appropriate individualization key stored in the portable verifier device associated with the document. The abovementioned third cryptographic operations will be based on public key cryptography composed of the verification of the signature by the portable verifier device associated with the document with the appropriate individualization key and a second verification of the signature using the public key of the readers/verifiers/recorders.

Another alternative way to individualize the portable verifier devices is by storing one or more portable verifier device keys, which must be the public keys of an asymmetric or public key cryptographic algorithm, and the first and second cryptographic operations are based on public key cryptography which is composed of an encryption using the public key corresponding to the secret key stored in the readers/verifiers/recorders involved in the validation of the document and a digital signature using the secret key corresponding to the appropriate individualization key stored in the portable verifier device associated with the document. The third cryptographic operations will be based on public key cryptography composed of the verification or the signature by the portable verifier device associated with the document using the appropriate individualization key and a decryption using the secret key corresponding to the readers/verifiers/recorders.

In addition, before the validating the document, the method introduced by the invention also checks that this has not already been included in the list of validated documents.

What's more, the reader/verifier/recorder will be informed if the document to be validated has already been included in the list of validated documents, so that it can proceed as appropriate.

The document to be validated will then be included in the list of validated documents, provided it does not already appear therein, and the corresponding cryptographic operation will be carried out when reversing and/or checking the cryptographic operation corresponding to the portable verifier device, and the result will be sent to the reader/verifier/recorder so that it can proceed as appropriate.

One advantage is that the cryptographic authentication established between the portable verifier device and the reader/verifier/recorder is both mutual and firm.

One fact of particular importance is that a cooperative and random session key is established between the portable verifier device and the reader/verifier/recorder and this is used to encrypt all pertinent messages between the two.

Ideally senders should individualize the portable verifier devices using one or more keys obtained from the encryption of the serial number using one or more master keys chosen by the portable verifier device operators, so that the master key of each operator and the portable verifier device correspond s with the identifier, which should be legible by the user.

In accordance with this invention, the abovementioned reader/verifier/recorder has been adapted to send information, accepting or rejecting the document and stating the reason why.

Another advantage of this method is that the reader/verifier/recorder keys are common to the group of readers.

The keys stored in the readers/verifiers/recorders are obtained by encrypting the identifiers, or parts of these, using the master keys chosen by the operators.

In the event the document has an expiry date, this will be included in the authentication code, so that they can be eliminated from the list of validated documents stored in the portable verifier once this date has passed.

On the other hand, said portable verifier devices receive the date expired documents are to be deleted from the list of validated documents through a digital certificate sent by a competent body.

The document and/or authentication code can be selected and obtained through Internet and the document's authentication code can be sent to the user's mobile phone or electronic agenda, or indeed any similar device belonging to the user.

Another characteristic of the invention is that it is possible to print the authentication code through one or more barcodes. In the case of several barcodes, these will include the correct reading order. It will also be possible to print the authentication code alphanumerically or through a dot code. The authentication code can be printed alphanumerically so that this can by keyed in manually in the event the automatic reading code deteriorates.

The method described guarantees the documents are unique and authentic. The encryptions of the authentication codes is carried out using two secret keys, which ensures authentic documents cannot be generated externally. The document can be made unique by associating one of the encryptions with the portable verifier device. In the event the document is duplicated by a system, no result will be obtained, as once the portable verifier device has validated the document it will not revalidate this. Thus, to be able to use a copy it would also be necessary to duplicate the portable verifier device, which is impossible due to its characteristics.

On the other hand, it is also possible to cancel documents without needing to send black lists to the reader/verifier/recorder. In order to cancel a document, the holder has to take the document in question and the portable verifier device to an authorized office. The document will then be entered as cancelled in the portable verifier device in such a way that, should the purchaser have kept a copy of the document, he will not be able to use this, as the portable verifier device will no longer validate it.

If we wish to avoid overloading the storage capacity of the portable verifier device, the following should be borne in mind when including lists of cancelled documents. Documents that expire should include an expiry date in the authentication code, so that once they are out of date, they can be eliminated from the list and no longer take up space. The portable verifier devices should incorporate an administrator for residual cancellations to detect expired documents and clear the lists after the date obtained from a certificate provided by the reader/verifier/recorder. The date is obtained from a central server that certifies this through a public key system. This certificate, which may be sent just once a day, is sent to the portable verifier device which, after verifying its authenticity, eliminates the documents that have been cancelled according to the certified date from the list. Needless to say, an expired document will never be accepted as valid.

This is a universal system that can be used by many different services (admissions tickets, transport tickets, season tickets, vouchers, cheques, lottery tickets, etc.), several Internal portals, and several portable verifier device operators. Although this system is especially useful in the case of printed format, it can be also be used with other different types of format, such as diskettes, storage on mobile telephones, portable electronic agendas or similar, Bluetooth cards, optical discs, CDs, etc.

The alternative used in the case of mobile telephones and electronic agendas is particularly interesting, as it is possible to send the document's authentication code to the purchaser's mobile phone through an SMS text message or using WAP technology, and when the document is to be used, the purchaser can download this in the reader/verifier/recorder using an infrared link, radio link (for example, Bluetooth or SMS, etc.) or another similar system.

In this case, as indicated above, there is no restriction on the length of the barcode, which means that public key cryptography can be used without any problems.

Underneath is a description of how public key cryptography can be used to generate the authentication code.

First of all, it is necessary to select the relevant information, code it and digitally sign it using the secret key of the appropriate reader operator (the reader/verifier/recorder responsible for checking the corresponding public key is stored in the document).

Then, the result of the previous operation is encrypted using the public key of the portable verifier device associated with the document (the portable verifier device charged with validating the document has the corresponding key secret stored inside).

The verification process is explained below:

The authentication code is read and transmitted to the portable verifier device, which decrypts this using its secret key and introduces it into the list of validated documents (in the event this document was already included on the list, the reader/verifier/recorder will be notified).

Said reader/verifier/recorder receives this decryption and checks the validity of the signature using the public key of the reader operator that generated the authentication code. If the signature is correct, it accepts the document and, if not, the document will be rejected.

There are four possible combinations when using public key cryptography for this purpose and these are the encryption (signature) as explained above, signature (signature), encryption (encryption) and signature (signature). It should be noted that, although all four options are possible, ideally the first should be used, as it minimizes the risks of attacks on the system. Specifically, it makes the secret key of the reader operator unnecessary and prevents the content of the security code from being read.

Another advantage offered by the method presented by this invention is that it is possible to generate documents of a determined type or service for the portable verifier devices of different operators. Thanks to this functionality, it is possible for several different porals associated with different operators of portable verifier devices to generate documents for the same service.

In addition, this invention ensures that the different services and portable verifier device operators cannot affect the operation and security of other services and operators for which they have not been given authorization. What's more, the user can remain anonymous and the system can be used by anybody with an appropriately programmed smart card (portable verifier device), but does not require personal identification of the user (only the card has to be identified and this can be impersonal and transferable).

One especially important aspect of the method described is that it can be easily implanted with the current ticket issuing systems.

The method for sending and validating documents of this invention can be used for several different types of document in many different services and applications. Some examples of the different types of document are admission tickets into cinemas, theatres, shows, etc. where an extra service, for example parking, can be contracted. Tickets for trains, buses, ships and any form of transport in general where there is a specific date to travel and a ticket inspector (not a boarding card), plane tickets, where a boarding card is necessary, hotel vouchers and vouchers for admission to festivals, etc. when neither the date nor the place have been specified beforehand, season tickets for city transport, for example by subway, bus, local or suburban train when neither the date nor the period have been specified beforehand, vouchers for sales promotions, cheques, lottery tickets, etc.

Underneath is an explanation of how the method introduced by this invention should preferably be carried out.

We are going to look at one specific case in which there is only one sending card operator, which also functions as a reader operator. In addition, the system is used to sell tickets over the Internet to be later printed in the client's home using a standard 300 dpi printer.

MIFARE ProX cards are used as portable verifier devices and these have been personalized using a key obtained by encrypting the serial number of each card using DES Triple with a master key. Thus, it is not necessary to save the correspondence between the serial number and the card key in a database. The entire protocol to be maintained with the reader/verifier/recorder is programmed in the cards and these are also given a list of cancelled tickets with the method for eliminating the expired tickets from the list by inserting a date certificate in the card. The cryptographic coprocessor of the card is especially indicated for this task. Once the cards have been personalized, they are provided to the system users.

The holder of each ticket can then connect to the ticket portal they wish, normally selecting the one that interests them, and use any one of the methods of payment accepted by the portal in question. Once the portal decides the transaction is valid, it sends the date to be incorporated into the ticket's authentication card (a supposed value of 128 bits, more than enough for almost all applications) to the card and reader operators, which in this case would be the same. It also sends the purchaser's card identifier and the identifier of the group of readers in charge of verification so that the appropriate keys can be selected. The transmission is carried out via Internet using SSL to guarantee its integrity and authenticity.

The card operator and reader carried out the initial DES Triple encryption of the data received using the key of the indicated group of readers. Given the block size of the algorithm is 64 bits, the linked encryption of the two blocks is carried out in CBC mode (128 bits). The reader key is obtained encrypting (DES Triple) the reader identifier with a master key known only to him. Then a second DES Triple encryption is carried out (also CBC linked) using the smart card key of the ticket holder, which can be obtained, by encrypting the card identifier with a master key, as in the case of the reader. The result of these two encryptions is a block of 128 bits that makes up the ticket's authentication code. This code is returned to the portal also through SSL.

The ticket portal generates a PDF version of the ticket, which contains the authentication code in two code 128 type barcodes. The reason two barcodes are used is that, for a printing resolution of 300 dpi, the length of a code128 barcode is some 75 mm for approximately 64 bits of information, which corresponds to the maximum width admitted by inexpensive barcode readers. The codes include non-coded information thus making the reading order irrelevant. The ticket also includes a numerical transcription of the code information, so that in the event this deteriorates; said information can be manually keyed in.

The PDF format of the ticket is sent to the purchaser, who can then immediately print this out using a standard printer.

When the ticket holder arrives at the entrance to the show, he hands this and the ticket to the doorman. The doorman reads the barcode and then brings the smart card over to the reader/reader without these actually coming into direct contact. At this moment the information in the barcode is transferred to the card, which checks that this is not already on the list of cancelled tickets. If this is the case, the reader is informed, so that the doorman can proceed as appropriate. In the event the ticket is not on the list of cancelled tickets, it will be added to this, decrypted with its key and sent to the reader. The reader then decrypts it again using its secret key and checks that the data are consistent (date, session, seat number, etc.). If all this coincides, the admission ticket to the show will be definitively validated. Before the data are transferred between the reader and the card, firm, mutual challenge-based identification takes place and a session key that is used to encrypt the entire communication will be established.

Although it is possible to employ the system using only the encryption corresponding to the card, this is not recommendable as the card's response can be easily replaced, which would considerably weaken system security.

It will be clear to anyone with an in-depth knowledge of the subject matter that this method can be varied and modified in numerous different ways, and that the details given can be substituted for other technically equivalent ones, without straying from the scope of protection defined by the attached claims.

## Claims

1. Method for sending and validating documents involving the following elements:
a) portable verifier device issuer providing portable verifier devices;
b) a reader operator carrying out a first cryptographic operation;
c) a portable verifier device operator carrying out a second cryptographic operation;
d) a document portal providing said documents;
e) a plurality of groups of reader/verifier/recorder carrying out a portion of third cryptographic operations; and
f) a plurality of portable verifier devices carrying out another portion of said third cryptographic operations;
wherein
the method comprises the following steps:
the portable verifier devices are individualized by said portable verifier device issuer using one or more keys of the portable verifier operator;
the document is generated by said document portal and the data considered relevant are coded by said reader operator using the key that corresponds to the group of readers/verifiers/recorders involved in the validation of the document, so that said first cryptographic operation is carried out, and said first cryptographic operation is followed by said second cryptographic operation carried out by said portable verifier device operator using the key corresponding to the portable verifier device associated with the document, and, as a result of these cryptographic operations, an authentication code is created for the document which is incorporated therein; and
the document is checked by the reader/verifier/recorder in combination with the portable verifier device for its authentication code, and said third cryptographic operations are carried out to verify those operations already used to generate the document, firstly by the portable verifier device with its corresponding key and said portable verifier contains a list of validated documents to determine whether or not this is the first validation and afterward by the reader/verifier/recorder with its corresponding key.

2. Method for sending and validating documents in accordance with the first claim
**characterized in that**
the individualization step of the portable verifier devices is carried out by storing one or more portable verifier device keys, which must be symmetric or secret keys of an encryption algorithm;
the first and second cryptographic operations are made up of two encryptions using a symmetric cryptographic algorithm, one using the key of the group of readers/verifiers/recorders involved in the validation of the document and the other using the key that corresponds to the portable verifier device associated with the document; and
the third cryptographic operations consist of decrypting, by the portable verifier device using its corresponding key, the document's authentication code and the subsequent decryption, carried out by the reader/verifier/recorder and its corresponding key, effecting both decryptions through symmetric cryptographic algorithms.

3. Method for sending and validating documents in accordance with the first claim
**characterized in that**
the individualization step of the portable verifier devices is carried out by storing one or more portable verifier device keys, which must be secrets keys of an asymmetric or public cryptographic algorithm;
the first and second cryptographic operations are based on public key cryptography which is composed of a digital signature with a secret key, and the readers/verifiers/recorders involved in the validation of the document will know its corresponding public key, and an encryption using the corresponding public key of the portable verifier device associated with the document; and
the third cryptographic operations will be based on public key cryptography composed of a decryption using the secret key corresponding to the portable verifier device associated with the document and the verification of the signature, using the corresponding public key stored in the readers/verifiers/recorders.

4. Method for sending and validating documents in accordance with the first claim
**characterized in that**
the individualization step of the portable verifier devices is carried out by storing one or more portable verifier device keys, which must be the secret keys of an asymmetric or public key cryptographic algorithm;
said first and second cryptographic operations are based on public key cryptography which is composed of an encryption using the public key of the readers/verifiers/recorders involved in the validation of the document, and an encryption using the corresponding public key of the portable verifier device associated with the document; and
said third cryptographic operations will be based on public key cryptography composed of a decryption using the secret key corresponding to the portable verifier device associated with the document and a decryption using the secret key of the readers/verifiers/recorders.

5. Method for sending and validating documents in accordance with the first claim
**characterized in that**
the individualization step of the portable verifier devices is carried out by storing one or more portable verifier device keys, which must be the public keys of an asymmetric or public key cryptographic algorithm;
said first and second cryptographic operations are based on public key cryptography which is composed of digital signature using the secret key that corresponds to the public key stored in the readers/verifiers/recorders involved in the validation of the document, and another digital signature using the secret key corresponding to the individualization key stored in the portable verifier device associated with the document; and -
said third cryptographic operations are based on public key cryptography composed of the verification of the signature by the portable verifier device associated with the document using the individualization key and a second verification of the signature using the public key of the reader/verifiers/recorders.

6. Method for sending and validating documents in accordance with the first claim
**characterized in that**
the individualization step of the portable verifier devices is carried out by storing one or more portable verifier device keys, which must be the public keys of an asymmetric or public key cryptographic algorithm;
said first and second cryptographic operations are based on public key cryptography which is composed of an encryption using the public key corresponding to the secret key stored in the readers/verifiers/recorders involved in the validation of the document and a digital signature using the secret key corresponding to the individualization key stored in the portable verifier device associated with the document; and
said third cryptographic operations will be based on public key cryptography composed of the verification of the signature by the portable verifier device associated with the document using the individualization key and a decryption using the secret key corresponding to the readers/verifiers/recorders.

7. Method for sending and validating documents in accordance with any of the preceding claims, **characterized in that** it comprises to check, before the document is validated, that it is not already included in said list of validated documents.

8. Method for sending and validating documents in accordance with the seventh claim
**characterized in that** the reader/verifier/recorder is informed if the document to be validated in already included in said list of validated documents.

9. Method for sending and validating documents in accordance with the seventh claim
**characterized in that** the document to be validated will be included in said list of validated documents, provided it was not already there, and the corresponding cryptographic operation will be carried out when reversing and/or checking the cryptographic operation corresponding to the portable verifier device, and the result is sent to the reader/verifier/recorder.

10. Method for sending and validating documents in accordance with the first claim
**characterized in that** the cryptographic authentication established between the portable verifier device and the reader/verifier/recorder is mutual and robust.

11. Method for sending and validating documents in accordance with the tenth claim **characterized in that** a cooperative and random session key is established between the portable verifier device and the reader/verifier/recorder and is used to encrypt messages between them.

12. Method for sending and validating documents In accordance with the first claim
**characterized in that** the portable verifier devices are individualized by said issuer using one or more keys obtained from the encryption of a serial number with one or more master keys chosen by the portable verifier device operators, so that the master key of each operator and the portable verifier device correspond to an identifier, which is legible by the user.

13. Method for sending and validating documents in accordance with the first claim
**characterized in that** the reader/verifier/recorder has been adapted to send information, accepting or rejecting the document and reporting a cause.

14. Method for sending and validating documents in accordance with the first claim
**characterized in that** the reader/verifier/recorder keys are common to a group of readers/verifiers/recorders.

15. Method for sending and validating documents in accordance with the first claim
**characterized in that** the keys stored in the readers/verifiers/recorders are obtained by encrypting all or part of their identifiers using master keys chosen by the operators.

16. Method for sending and validating documents in accordance with the first claim
**characterized in that** when the document has an expiry date, this is included in the authentication code, and the document is eliminated from the list of validated documents stored in the portable verifier once this date has passed.

17. Method for sending and validating documents in accordance with the sixteenth claim **characterized in that** said portable verifier devices receive the date to delete the expired documents from the list of validated documents through a digital certificate sent by a competent entity.

18. Method for sending and validating documents in accordance with any of the previous claims **characterized in that** the document and/or authentication code is selected and obtained through the Internet.

19. Method for sending and validating documents in accordance with any of the previous claims **characterized in that** the document's authentication code is transmitted to an user's mobile telephone.

20. Method for sending and validating documents in accordance with any of the previous claims **characterized in that** the document's authentication code is transmitted to an user's electronic agenda.

21. Method for sending and validating documents in accordance with any of the previous claims **characterized in that** the authentication code is printed as a bar code.

22. Method for sending and validating documents in accordance with any of the previous claims **characterized in that in that** the authentication code is printed as at least two bar codes.

23. Method for sending and validating documents in accordance with any of the previous claims **characterized in that** the authentication code is printed as an alphanumerical code.

24. Method for sending and validating documents in accordance with any of the previous claims **characterized in that** the authentication code is printed as a dot code.

25. Method for sending and validating, documents in accordance with the twenty first twenty second and twenty fourth claims **characterized in that** the authentication code is also printed as an alphanumerical code.

26. Method for sending and validating documents in accordance with the twenty second claim **characterized in that** the barcodes include the correct reading order.

## Patentansprüche

1. Methode zum Senden und Validieren von Dokumenten, folgende Elemente enthaltend:
a) einen tragbaren Prüfeinheintenausgeber, der tragbare Prüfeinheiten bereitstellt;
b) einen Leser-Betreiber der eine erste kryptographische Operation durchführt;
c) einen tragbaren Prüfeinheit-Betreiber der eine zweite kryptographische Operation durchführt;
d) ein Dokumenten-Portal, der besagte Dokumente bereitstellt;
e) eine Anzahl von Gruppen von Lesen / Prüfern / Recordern, die einen Teil von dritten kryptografischen Operationen durchführen und
f) eine Anzahl von tragbaren Prüfeinheit-Betreibern die einen anderen Teil der genannten dritten kryptografischen Operationen durchführen;
**gekennzeichnet dadurch, dass** die Methode folgende Schritte umfasst:
die tragbaren Prüfeinheiten werden durch besagte tragbare Prüfeinheit-Ausgeber individualisiert, indem sie eine oder mehrere Schlüssel des tragbaren Prüfeinheit-Betreibers anwenden.
Das Dokument wird durch besagtes Dokumenten-Portal erzeugt, und die als relevant betrachteten Daten werden durch besagten Leser-Betreiber kodifiziert, indem man den zur Gruppe von Lesern / Prüfern / Recordern zugehörigen in der Validierung des Dokumenten einbezogenen Schlüssel anwendet, so dass besagte erste kryptographische Operation durchgeführt wird, und besagte erste kryptographische Operation von besagter zweiten kryptographischen Operation gefolgt wird, die von besagtem tragbaren Prüfeinheit-Betreibern durchgeführt wird, indem diester den zu dem mit dem Dokumenten asoziierten tragbaren Prüfeinheit gehörigen Schlüssel anwendet, und als Ergebnis dieser drei kryptografischen Operationen einen Authentifizierungskode für das miteingeschlossene Dokument erzeugt,
und dass das Dokument vom Prüfeinheit-Betreiber in Kombination mit der tragbaren Prüfeinheit nach dessen Authentifizierungskode geprüft wird, und besagte dritte kryptographische Operationen werden durchgeführt, um diejenigen zur Generierung des Dokuments bereits verwendeten Operationen zu überprüfen, in erster Linie von der tragbaren Prüfeinheit mit ihrem entsprechenden Schlüssel und besagte tragbare Prüfeinheit enthalt eine Liste von validierten Dokumenten, um festzustellen, ob diese die erste Validierung ist oder nicht ist, und danach von dem Leser / Prüfer / Recorder mit ihrem entsprechenden Schlüssel.

2. Methode zum Senden und validieren von Dokumenten nach dem ersten Anspruch **dadurch gekennzeichnet, dass**
der Individualisierungsschritt der tragbaren Prüfeinheiten durch die Speicherung des Schlüssels einer oder mehrerer tragbaren Prüfeinheiten erfolgt, welche symmetrische oder Geheimschlüssel eines Verschlüsselungs-Algorithmus sein müssen;
die erste und die zweite kryptographische Operationen aus zwei symmetrischen Verschlüsselungen die einen kryptografischen Algorithmus verwenden bestehen, einer mit dem Schlüssel aus der Gruppe der Leser / Prüfer / Recorder, der bei der validierung des Dokuments beteiligt war, und der andere mit dem Schlüssel, welcher dem mit dem Dokumenten verbundenen tragbaren Prüfeinheit entspricht, und
die dritte kryptographische Operationen aus der Entschlüsselung durch die tragbaren Prüfeinheiten mit dem entsprechenden schlüssel, der Code-Authentifizierung der Dokumente und der anschließenden Entschlüsselung, ausgeführt von den Lesern / Prüfen / Recordern und ihren entsprechenden Schlüssel bestehen, wobei beide Entschlüsselungen durch symmetrische kryptografische Algorithmen durchgeführt werden.

3. Methode zum Senden und validieren von Dokumenten nach dem ersten Anspruch **dadurch gekennzeichnet, dass**
der Individualiaierungsschritt der tragbaren Prüfeinheiten durch die Speicherung eines oder mehrerer Prüfeinheit-Schlüssel erfolgt, welche geheime Schlüssel eines asymmetrischen oder öffentliche kryptographischen Algorithmus sein müssen.
die erste und zweite kryptographische Operationen auf der Kryptographie öffentliche Schlüssel, bestehend aus einer digitale Signatur mit Geheimschlüssel basieren, und der au der Dokumentenvalidierung beteiligte Leiser / Prüfer / Recorder dessen entsprechenden öffentlichen Schlüssel und eine Verschlüsselung mit dem entsprechende öffentliche Schlüssel der mit dem Dokument verbundenen tragbaren Prüfeinheit kennen wird.
die dritte kryptograhische Operationen werden einer Kryptographie mit öffentlichen Schlüssel zugrundeliegen, bestehend aus einer Entschlüsselung mit dem der mit dem Dokumenten assoziierten tragbaren Früfeinheit zugehörenden Geheimschlüssel.
und der Verifizierung der Signatur mit dem entsprechenden in den Prüfer / Recorder gespeicherten öffentliche Schlüssel.

4. Methode zum Senden und Validieren von Dokumenten nach dem ersten Anspruch **dadurch gekennzeichet, dass**
der Individualisierungsschritt der tragbaren Prüfeinheit durchgeführt wird, indem eine oder mehrere Schlüssel der tragbaren Prüfeinheit gespeichert werden, welche Geheimschlüssel eines asymmetrischen oder Public-Key Algorithmus sein müssen;
besagte erste und zweite kryptographischen operationen werden auf Grundlage der Kryptographie öffentlicher Schlüssel, die aus eine verschlüsselung mit dem öffentlichen Schlüssel der in der Dokumentenvalidierung Leser / Prüfer/ Recorder, und einer Verschlüsselung mit dem entprechenden öffentlichen Schlüssel der tragbaren mit dem Dokument verbundenen Prüfeinheit.
besagte dritte kryptographische Operationen einer Public Key-Kryptographie zugrundeliegen, bestehend aus einer Entschlüsselung mit dem der mit dem Dokument verbundenen tragbaren Prüfeinheit entsprechenden Geheimschlüssel, und einer Entschlüsselung die den Geheimschlüssel des Lesers / Prufers / Recorders verwendet.

5. Methode zum Senden und Validieren von Dokumenten nach dem ersten Anspruch **dadurch gekennzeichnet dass**
der Individualisierungsschritt der tragbaren Prüfeinheit mittels der Spreicherung eines oder mehrerer Schlüssel der tragbaren Prüfeinheit durchgeführt wird, welche öffentliche Schlüssel eines asymmetrischen oder öffentlichen kryptographischen SchlüsSel-Algorithmus sein müssen;
besagte erste und zweite kryptographische Operationen sich auf der Kryptographie mit öffentlichen Schlüssel stützen, die aus einer digitalen Signatur mit dem Geheimschlüssel, welches dem in den an der Dokumentvalidierung beteiligten Lesern / Prüfern / Recordern gespeicherten öffentlichen Schlüssel entspricht,
und eine weitere digitale Signatur mit Hilfe von dem Geheimschlüssel, der dem in der tragbaren, im Zusammenhang den Dokument stehenden Prüfeinheit gespeicherter Individualisierungsschlussel entspricht, und
besagte dritte kryptografischen Operationen sich auf Kryptographie mit öffentlichen Schlüsseln stützen, die aus der Überprüfung der Signatur durch die im Zusammenhang Mit dem Dokument stehende Prüfereinheit besteht, mit dem Individualisierungsschlüssel und einer zweiten Überprüfung der Signatur mit dem öffentlichen Schlüssel der Leser / Prüfer / Recordern.

6. Methode zum Senden und Validieren von Dokumenten nach dem ersten Anspruch **dadurch gekennzeichnet, dass** der Individualisierungschritt der tragbaren Prüfungseinheit durchgeführt wird, indem eine oder mehrere Schlüssel der tragbaren Prüfungseinheit gespeichert werden, die öffentliche schlüssel eines asymmetrischen oder öffentlichen kryptographischen Schlüssel-Algorithmus sein müssen;
besagte erste und zweite kryptographische Operationen sich auf öffentliche Schlüssel-Kryptographie stützen, die aus einer Verschüsselung mit öffentlichem Schlüssel besteht, der dem in den Lesern / Prüfern / Recordern gepeicherten Geheimschlüssel entspricht, die an der Dokumentenvalidierung beteiligt waren, und einer digitalen Signatur mit Hilfe des Geheimschlüssels, der dem Individualisierungsschlüssel entspricht, der in der mit dem Dokument verbundenen tragbaren Prüfeinheit gespeichert ist, und
besagte dritte kryptografische Operationen sich auf öffentliche Schlüssel-Kryptographie stützen, die aus der überprüfung der Signatur durch die mit dem Dokument zusammenhängenden tragbare Prüfeinheit mit dem IndividualisierungsschLüssel und eine Entschlüsselung mit dem den Lesern / Prüfern / Recordern entsprechenden Geheimschlüssel.

7. Methode zum Senden und Validieren von Dokumenten nach einem der vorhergehenden Ansprüche, **dadurch gekennzeichnet dass** er daraus besteht zu prüfen, bevor das Dokument validiert ist, dass es nicht bereits in dieser Liste der validierten Dokumente miteinbegriffen ist.

8. Methode zum Senden und Validieren von Dokumenten nach dem siebten Anspruch **dadurch gekennzeichnet, dass** der Leser / Prüfer / Recorder informiert wird, wenn das zu validierende Dokument bereits in dieser Liste der validierten Dokumente ist.

9. Methode zum Senden und Validieren von Dokumenten nach dem siebten Anspruch **dadurch gekennzeichnet, dass** das zu validierende Dokument in diese Liste der validierten Dokumente ausgenommen wird, sofern nicht bereits vorhanden, und die entsprechende kryptographische Operation bei Umkehrung und/oder Kontrolle der der tragbaren Prüfeinheit entsprechenden Operation durchgeführt wird, und das Ergebnis an den Leser / Prüfer / Recorder geschickt wird.

10. Methode zum Senden und Validieren von Dokumenten nach dem ersten Anspruch **dadurch gekennzeichnet, dass** die kryptographische Authentifizierung zwischen der tragbaren Prüfeinheit und dem Leser / Prüfer /-Recorder gegenseitig und robust ist.

11. Methode zum Senden und Validieren von Dokumenten nach dem zehnten Anspruch **dadurch gekennzeichnet dass** ein kooperativer und zufälliger Session-Schlüssel zwischen der tragbaren Prüfeinheit und dem Leser / Prüfer /-Recorder zur Nachrichtenverschlüsselung eingeführt wird.

12. Methode zum Senden und validieren von Dokumenten nach dem ersten Anspruch **dadurch** geken.nzeichnet, dass die tragbaren Prüfeinheiten von besagtem Emittenten individualisiert werden, indem ein oder mehrere Schlüssel aus der Verschlüsselung einer Laufnummer mit einem oder mehreren von der tragbaren Früfeinheit gewählten Meister-Schlüssel so verwendet werden, dass der Meister-Schlüssel eines jeden Betreibers und die tragbare Prüfeinheit einer Kennung entspricht, die vom Benutzer lesbar ist.

13. Methode zum Spenden und Validieren von Dokumenten nach dem ersten Anspruch **dadurch gekennzeichnet, dass** der Leser / Prüfer / Recorder zur Sendung von Informationen, Annahme oder Ablehnung des Dokuments und Berichterstattung einer Ursache angepasst wurde.

14. Methode zum Senden und Validieren von Dokumenten nach dem ersten Anspruch **dadurch gekennzeichnet dass** die Leser / Prüfer / Recorder-Schlüssel einer Gruppe von Lesen / Prüfern / Recordern angehören.

15. Methode für den versand und die validierung von Dokumenten nach dem ersten Anspruch **dadurch gekennzeichnet dass** der Schlüssel in den Lesern / Prüfern / Recordern durch Verschlüsselung aller oder eines Teils ihrer Identifikatoren unter Verwendung von Meister-Schlüssel gespeichert werden, die von den Betreiben gewählt werden.

16. Methode zum Senden und Validieren von Dokumenten nach dem ersten Anspruch **dadurch gekennzeichnet, dass**, wenn das Dokument ein Ablaufdatum hat, dieser in der Code-Authentifizierung miteinbegriffen ist, und das Dokument von der Liste der validierten Dokumente gestrichen wird, die in den tragbaren Prüfer nach diesem Zeitpunkt gespeichert ist.

17. Methode zum Senden und Validieren von Dokumenten nach dem sechzehnten Anspruch **dadurch gekennzeichnet dass** besagte tragbare Prüfungseinheiten das Datum erholten um die abgelaufenen Dokumente aus der Liste der validierten Dokumente durch ein von einer zuständigen Stelle geliefertes digitales Zertifikat zu löschen.

18. Methode zum Senden und Validieren von Dokumenten nach einem der vorherigen Ansprüche **dadurch** gekenntzeichnet, dass das Dokument und / oder Ruthentifizierungs-Code durch das Internet ausgewählt und erhalten wird.

19. Methode zum Senden und validieren von Dokumenten nach einem der vorherigen Anspruche **dadurch gekennzeichnet dass** die Authentifizierung-Code des Dokuments zu einem Benutzer-Mobiltelefon übertragen wird.

20. Methode zum Senden und Validieren von Dokumenten nach einem der vorherigen Ansprüche **dadurch gekennzeichnet dass** das Dokument die Authentifizierung-Code zu einer elektronischen Agenda eines Benutzers übertragen wird.

21. Methode zum Senden und validienen von Dokumenten nach einem der vorherigen Ansprüche **dadurch gekennzeichnet, dass** die Authentifizierungs-Code als Barcode gedruckt wird.

22. Methode zum Senden und Validieren von Dokumenten nach einem der vorherigen Ansprüche **dadurch gekennzeichnet dass** die Authentifizierungs-code als mindestens zwei Barcodes gedruckt wird.

23. Methode zum Senden und Validieren von Dokumenten nach einem der vorherigen Ansprüche **dadurch gekennzeichnet, dass** die Authentifizierungs-Code wird als alphanumerischer Code gedruckt wird.

24. Methode zum Senden und Validieren von Dokumenten noch einem der vorherigen Ansprüche **dadurch gekennzeichnet, dass** die Authentifizierungs-Code als ein Punkt-code gedruckt wird.

25. Methode zum Senden und Validieren von Dokumenten nach dem einundzwanzigten, zweiundzwanzigsten und dreiundzwanzigsten Anspruch **dadurch gekennzeichnet dass** die Authentifizierungs-Code auch als alphanumerisches Code gedruckt wird.

26. Methode zum Senden und Validieren Von Dokumenten nach dem zweiundzwanzigsten Anspruch **dadurch gekennzeichnet, dass** die Barcodes die richtige Lektüreordnung beinhalten.

## Revendications

1. Méthode de transmission et de validation des documentes comportant les éléments suivants:
a) émetteur de dispositifs vérificateurs portables fournissant des dispositifs vérificateurs portables;
b) un lecteur opérateur qui effectue une première opération de chiffrement;
c) un dispositif portable vérificateurs opérateur qui effectue une seconde opération de chiffrement;
d) un document portail fournissait ces documents;
e) une pluralité de groupes de lecteurs / vérificateurs / Enregistreurs de la réalisation d'une portion de troisièmes opérations cryptographiques et
f) une pluralité de dispositifs vérificateurs portables réalisant une autre pactise de ceux troisièmes opérations cryptographiques;
que comprend les étapes suivantes:
le dispositifs vérificateurs portables sont individualisés par ledit émetteur de dispositif vérificateur portable utilisant une ou plusieurs clefs d'opérateur vérificateur portable;
le document est généré par cet document portail et les données considérées comme pertinente9 sont cordées par cet lecteur opérateur en utilisant la clé qui correspond au groupe de lecteurs / vérificateurs / enregistreurs impliqués dans la validation du document, de sorte que ladite première opérations de chiffrement est effectué, et ladite première Opération de chiffrement est suivie par cette deuxième opération cryptographique réalisée par ledit opérateur de dispositif vérificateur portable en utilisant la clé correspondant au dispositifs vérificateur portable associé au document et, à la suite de cettes opérations cryptographiques, un code d'authentification est créé pour le document qui y est intégrée;
et le document est vérifié par le lecteur / vérificateur / enregistreur en combinaison avec le dispositif vérificateurs portable pour son code d'authentification et cettes troisièmes opérations sont effectués pour vérifier les opérations déjà utilisé pour générer le document, tout d'abord par le dispositifs vérificateur portable avec son clé correspondant et dit dispositif vérificateur contient une liste des documents validés pour détexminer si c'est ou ce n'est pas la première validation et postface par le lecteur / vérificateur. / enregistreur avec sa clé correspondante.

2. Méthode de transmission et de validation des documents, selon la première revendication **caractérisée en ce que** la mesure d'individualisation des dispositifs vérificateur portables est effectuée par stockage d'une ou de plusieurs clés de dispositif vérificateurs portable, qui doivent être des clés symétriques ou des clés sécrètes d'un algorithme déchiffrement;
la première et la deuxième opérations cryptographiques sont constitués de deux cryptages en utilisant un algorithme déchiffrement symétrique, l'un utilisant la clé du groupe de lecteurs / vérificateurs / enregistreurs impliqués dans la validation du document et l'autre en utilisant la clé qui, correspond au dispositif vérificateur portable associe au document, et
les troisièmes opération cryptographiques consistent en décryptage, par le dispositif vérificateur portable en utilisant sa clé correspondante, des documents d'authentification et de la coda de décryptage réalisée par le lecteur /vérificateur / enregistreur et sa clé correspondant, en réalisant les deux décryptons au moyen d'algorithmes cryptographiques symétriques.

3. Méthode de transmission et de validation des documents, selon la première revendication **caractérisée en ce que** la mesure d'individualisation des dispositifs vérificateurs portables est effectuée par stockage d'une ou de plusieurs clés de dispositifs vérificateur portable, qui, doivent être clés secrètes d'un algorithme cryptographique asymétrique ou publique.
la première et la deuxième opérations cryptographiques sont basés sur la cryptographie à clé publique qui est composée d'une signature numérique avec une clé secrète, et les lecteurs / vérificateurs / enregistreurs impliquées dans la validation du document sauront sa clé publique correspondante à l'appareil portable vérificateur associés avec le document et
la troisième cryptograhic opérations sera basé sur la cryptographie à clé publique, composé d'un décryptage utilisant la clé correspondant à l'appareil portable vérificateur associé au document et à la vérification de la signature, en utilisant la clé publique correspondant gardée dans les lecteurs / vérificateurs / enregistreurs.

4. Méthode de transmission et de validation des documents, selon la première revendication **caractérisée en ce que** l'étape d'individualisation des dispositifs de vérification portables est effectuée par stockage d'une ou plusieurs clés de dispositifs de vérification portable, qui doivent être les clés secrète d'un algorithme cryptographique asymétrique ou publique,
ladite première et deuxième opérations cryptographiques sont basés sur la cryptographie à clé publique qui est composé d'un chiffrements à l'aide du clé publique des lecteurs / vérificateurs / enregistreurs impliqués dans la validation du document et d'une signature numérique à l'aide de la clé secrète correspondant à la clé d'individualisation gardée dans le dispositif de vérification portable associé avec le document, et d'un chiffrage utilisant la clé publique correspondante du dispositif vérificateur portable associé au document, et
lesdites troisièmes opérations cryptographiques seront basées sur une cryptographie à clé publique, composée d'un décryptage utilisant la clé correspondant au dispositif de vérification portable associé au document et une décryptage en utilisant la clé secrète des lecteurs / vérificateurs / enregistreurs.

5. Méthode de transmission et de validation des documents, selon la première revendication **caractérisée en ce que** l'étape d'individualisation du dispositifs de vérification portable est effectuée par stockage d'un ou plusieurs clés de dispositif de vérification portable, qui doivent être des clés publiques d'une algorithme cryptographique asymétrique ou à clé publique;
lesdites première et deuxième opérations cryptographiques sont basés sur la cryptographie à clé publique qui est composé d'une encryption en utilisant la clé publique qui correspond à la clé sécrète gardée dans les lecteurs / vérificateurs / enregistreurs impliques dans la validation du document, et un autre signature numérique en utilisant la clé secrète correspondant à la clé d'individualisation gardée dans le dispositif vérificateur portable associé au document, et
ledites trosiemes opérations cryptographiques sont basés sur la cryptographie à clé publique compostée de la vérification de la signature par le dispositif vérificateur portable associé avec le document en utilisant la clé d'individualisation et une décription en utilisant la clé secrète des lecteurs / vérificateurs / enregistreurs.

6. Méthode de transmission et de validation des documents, selon la première revendication **caractérisée en ce que** l'étape d'individualisation du dispositif vérificateurs portable est effectuée par stockage d'un ou plusieurs clés de dispositif vérificateur portable, qui doivent être les clés publique d'une algorithme cryptographique asymétrique ou à clé publique;
lesdites première et deuxième opérations cryptographiques sont basés sur la cryptographie à clé publique qui est composé d'un encription en utilisant la clé publique correspondant à la clé secrète gardée dans les lecteurs / vérificateurs / enregistreur impliqués dans la validation du document, et une signature numérique à l'aide de la clé secrète correspondent à la clé d'individualisation gardée dans dispositif vérificateur portable associe au document, et
lesdites troisième opérations cryptographiques sont basés sur la cryptographie à clé publique composée de la vérification de la signature par le dispositif vérificateur portable associé avec le document en utilisant la clé l'individualisation et d'une clé de déchiffrement utilisant la clé secrète correspondante aux lecteurs / vérificateurs / enregistreurs.

7. Méthode de transmission et de validation des documents, selon l'un des revendications précédentes, **caractérisée en ce qu'**elle comprend de vérifier, avant que le document est validé, que celui-ci n'est pas déjà inclus dans cette liste de documents validés.

8. Méthode de transmission et de validation des documents, selon la septième revendication **caractérisée en ce que** le lecteur / vérificateur / enregistreur est éclairé si le document à valider est déjà inclus dans cette liste de documents validés.

9. Méthode de transmission et de validation des documents, selon la septième revendication **caractérisée en ce que** le document a valider sera inclus dans cette liste de documents validés, à condition qu'il n'était pas déjà là, et l'opération de chiffrement sera effectué lors de l'inversion et / ou le contrôle de l'opération de chiffrement correspondant au dispositif vérificateur portable, et le résultat est envoyé au lecteur / vérificateur / enregistreur.

10. Méthode de transmission et de validation des documents, selon la première revendication **caractérisée en ce que** l'authentification cryptographique mis en place entre le dispositif vérificateur portable et le lecteur / vérificateur / enregistreur est mutuelle et robuste.

11. Méthode de transmission et de validation de documents selon la dixième revendication **caractérisée en ce que**
une clé de session coopérative et aléatoire est établie entre le dispositif vérificate portable et le lecteur / vérificateur / enregistreur et est utilisée pour crypter les messages entre eux.

12. méthode de transmission et de validation de la documentation selon la première revendication **caractérisée en ce que** les dispositifs vérificateur portables sont individualisés par dit émetteur en utilisant une ou plusieurs clés de chiffrement obtenues à partir de d'un numéro de série avec une ou plusieurs clés selectionnés par le dispositif vérificateur portable, de sorte que la clé maîtresse de l'opérateur et ledit dispositif vérificateur portable correspond à un identifiant, qui est lisible par l'utilisateur.

13. Méthode de transmission et de validation des documents, selon la première revendication **caractérisée en ce que** le lecteur / vérificateur / enregistreur a été adapté pour envoyer de l'information, d'accepter ou de rejeter le document et les rapports d'une cause.

14. Méthode de transmission et de validation de documents selon la première revendication **caractérisée en ce que** les clés de lecteur / vérificateur / enregistreur sont communs à une groupe de lecteurs / vérificateurs / enregistreurs.

15. Méthode de transmission et de validation de la documentation, selon la première revendication **caractérisée en ce que** les clés gardées dans le readers/vérifiers/recorders sont obtenus par le cryptage de tout ou partie de leur maître en utilisant les identificateurs clés choisis par les opérateurs.

16. Méthode de transmission et de validation des documents, selon la première revendication **caractérisée en ce que** lorsque le document a une date d'expiration, celui-ci n'est pas inclues dans le code d'authentification, et le document est éliminé de la liste de validation, des documents gardés dans le vérificateur portable une fois que cette date est passée.

17. Méthode de transmission et de validation des document, selon la seizième revendication **caractérisée en ce que** lesdites dispositifs vérificateur portables reçoivent la date pour supprime les documents expirés de la liste des documents validés par un certificat numérique envoyé par un organe compétent.

18. Méthode de transmission et de validation des documents, selon l'une des revendications précédentes **caractérisée en ce que** le document et / ou code d'authentification est sélectionnée et obtenu par le biais d'Internet.

19. Méthode de transmission et de validation des documents, selon l'une des revendications précédentes **caractérisée en ce que** le code d'authentification de documents est transmis au téléphone mobile d'un utilisateur.

20. Méthode de transmission et de validation des documents, conformément Väth ou l'autre des revendications précédentes **caractérisée en ce que** le code d'authentification du document est transmis à une agenda électronique d'un utilisateur

21. Méthode de transmission et de validation des documents, selon l'une des revendications précédentes **caractérisée en ce que** le code d'authentification est imprimé comme un code à barres.

22. Méthode de transmission et de validation de documents selon l'une des revendication précédentes **caractérisée en ce que** le code d'authentification est imprimé comme au moins deux codes à barres.

23. Méthode de transmission et de validation des documents, selon l'une des revendications précédentes **caractérisée en ce que** le code d'authentification est imprimé comme un code alphanumérique.

24. Méthode de transmission et de validation des documents, selon l'une des revendications précédentes **caractérisée en ce que** le code d'authentification est imprimé comme un code à points.

25. Méthode de transmission et de validation des documents, selon la vingt et unième vingt-deuxième et revendications **caractérisée en ce que** le code d'authentification est également imprimé comme un code alphanumérique.

26. Méthode de transmission et de des documents, selon la vingt-deuxieme revendication **caractérisée en ce que** les codes à barres incluent l'ordre correct de lecture.
